# EUROPÄISCHE PATENTSCHRIFT

(11) **EP 1 745 757 B1**
(45) Veröffentlichungstag und Bekanntmachung des Hinweises auf die Patenterteilung: **21.03.2018**
(21) Anmeldenummer: 06013229.7
(22) Anmeldetag: 27.06.2006
(51) Int. Cl.: A61C 5/42

(54) **Wurzelkanalinstrument mit abrasiver Beschichtung und Verfahren zur Herstellung desselben**
Root canal instrument with an abrasive coating and method for the manufacture thereof
Instrument pour canal radiculaire avec revêtement abrasif et son procédé de fabrication

(30) Priorität: 18.07.2005 DE 102005034010
(43) Veröffentlichungstag der Anmeldung: 24.01.2007
(73) Patentinhaber: Coltène/Whaledent GmbH + Co. KG, 89129 Langenau (DE)
(72) Erfinder: Mannschedel, Werner, 89129 Langenau (DE); Müller, Barbara, 89129 Langenau (DE)
(74) Vertreter: Forstmeyer, Dietmar

(56) Entgegenhaltungen:
- WO-A-2005/070320
- WO-A1-00/74589
- WO-A2-01/91662
- DE-A1- 3 436 636
- DE-A1- 4 003 748
- DE-U1- 29 521 098
- GB-A- 2 166 674
- JP-A- 58 177 643
- US-A- 4 019 254
- US-A- 4 190 958
- US-A- 5 984 679
- US-A1- 2004 023 186
- US-B1- 6 579 092

## Beschreibung

In dieser Offenbarung wird ein Wurzelkanalinstrument beschrieben, das eine Seele aus einem flexiblen elastischen Material mit Formengedächtnis besitzt und das auf der Seele eine Beschichtung mit abrasiven Partikeln aufweist. Ein derartiges Wurzelkanalinstrument ist aus der Druckschrift US 4,190,958 bekannt.

Aus dieser Druckschrift ist ferner bekannt, dass endodontische Wurzelkanalinstrumente im Gegensatz zu herkömmlichen, sehr dicken und unflexiblen dentalen Bohrern sehr dünn mit einem Durchmesser von weniger als einem halben Millimeter und sehr flexibel sind, um der Krümmung des Wurzelkanals in einem Zahn folgen zu können. Deshalb wird in der Druckschrift ein Bohrer vorgeschlagen, der aus einem flexiblen elastischen Material ist, das ein Formengedächtnis aufweist, um in eine gerade Position von einer gekrümmten Position zurückzukehren, wobei es die gekrümmte Position einnehmen muss, um in der Lage zu sein, dem gekrümmten Wurzelkanal zu folgen. Zusätzlich muss es dieses Formengedächtnis aufweisen, während es in der gekrümmten Position rotiert.

Als Material für die Seele wird in dieser Druckschrift ein Standardmaterial vorgeschlagen aus einem kohlenstoffhaltigen Chromstahl, der mit einer Diamantbeschichtung versehen ist. Die abrasiven Partikel der Diamantbeschichtung sind in einem elektrolytisch abgeschiedenen oder gesinterten oder durch Standardverfahren hergestellten Haftmittel fixiert.

Ein Nachteil eines derartigen Wurzelkanalinstruments ist es, dass bei einem geringen Durchmesser von nur etwa einem halben Millimeter ein mit einem elektrolytisch abgeschiedenen oder gesinterten Haftmittel beschichteter kohlenstoffhaltiger Chromstahldraht derart versteift, dass er trotz einer Seele aus einem flexiblen elastischen Material der Krümmung von Wurzelkanälen nicht folgen kann. Deshalb haben sich derartige Wurzelkanalinstrumente mit einer elastischen Seele und einer relativ steifen Beschichtung aus Diamantpartikeln nicht durchsetzen können, da ein Beschichten auf einer Länge von etwa 10 bis 12 mm auf der Seele mit einem elektrolytisch abgeschiedenen oder gesinterten diamanthaltigen Haftmittel die Flexibilität eines dünnen Chromstahldrahtes praktisch zunichte macht.

Seit 1998 werden in der Endodontie neue Instrumente aus Nikkel-Titan-Legierungen eingesetzt. Dieser Werkstoff weist etwa 55 Gew.% Nickel und etwa 45 Gew.% Titan auf, wobei ein geringer Nickelanteil von etwa 2 Gew.% durch Kobalt oder Aluminium substituiert sein kann. Die Nickel-Titan-Legierungen zeigen in ihrem Spannungs-Dehnungs-Verhalten eine sog. Superelastizität, da sie neben der Hook'sehen Elastizität von den aus der Druckschrift US 4,190,958 bekannten Chromkohlenstoffstählen ein bei Chromkohlenstoffstählen nicht gekanntes erhebliches Formengedächtnis aufweisen. Dieses Formengedächtnis resultiert aus der Fähigkeit dieses im Anmeldejahr 1978 der Druckschrift US 4,190,958 noch völlig unbekannten Werkstoffes, bei Verformung aus seinem austentischem Gefüge in ein teilweise martensitisches Gefüge auszuweichen und bei Entlastung das ursprünglich austentische Gefüge bei Raumtemperatur und damit die ursprüngliche Form wieder aufzubauen.

Deshalb werden für die Endodontie Wurzelkanalinstrumente aus verdrillten Streifen oder Stäbe dieser neuartigen Legierung durch Schleifen oder Spanen geformt. Doch auch diese Legierung besitzt Nachteile. Die Vickershärte HV der Legierung ist mit 303-362 HV gegenüber kohlenstoffhaltigem Chromstahl mit 522-542 HV um fast ein Drittel geringer als kohlenstoffhaltiger Chromstahl. Daher wird im Stand der Technik empfohlen, wegen ihrer größeren Schneidleistung Stahlinstrumente in Bereichen einzusetzen, in denen die Flexibilität der Wurzelkanalinstrumente nicht benötigt wird. Die begrenzte Abtragsrate aufgrund der geringeren Vikkershärte sind jedoch bei Wurzelkanalinstrumenten aus Nickel-Titan in Kauf zu nehmen. Außerdem werden Wurzelkanalinstrumente aus Nickel-Titan meist mit drehmomentbegrenzten Antriebsmitteln eingesetzt, um der erhöhten Bruchgefahr bei Überlastung vorzubeugen. Es besteht somit der Bedarf einerseits den Einsatzbereich derartiger endodontischer Instrumente zu vergrößern und andererseits den Mangel an ausreichender Härte zu beheben. Aus der US20040023186 ist ein Wurzelkanalinstrument bekannt, das durch das Verdrillen eines prismatischen Stabs herstellt werden kann. Das Wurzelkanalinstrument kann aus einer Titan-Nickellegierung sein und kann abrasive Oberfläche aufweisen.

Aufgabe der Erfindung ist es, ein Wurzelkanalinstrument zu schaffen, das auf der Seele eine Beschichtung mit abrasiven Partikeln aufweist, jedoch die Nachteile im Stand der Technik und das Problem der geringeren Schneid- und Bohrleistung von Wurzelkanalinstrumenten auf der Basis von Nickel-Titan-Legierungen überwindet. Diese Aufgabe wird mit dem Gegenstand der unabhängigen Ansprüche gelöst. Vorteilhafte Weiterbildungen der Erfindung ergeben sich aus den abhängigen Ansprüchen. Beispielsweise wird ein Wurzelkanalinstrument geschaffen, das eine Seele aus einem flexiblen elastischen Material mit Formengedächtnis besitzt und auf der Seele eine Beschichtung mit abrasiven Partikeln aufweist. Dazu ist die Seele entweder aus einer Nickel-Titan-Legierung aufgebaut oder weist einen Kunststoff, vorzugsweise einen kohlefaserverstärkten Kunststoff auf. Darüber hinaus ist die Flexibilität der Beschichtung mit abrasiven Partikeln an die Flexibilität der Seele angepasst.

Diese Flexibilität der Beschichtung kann durch Haftmittel erreicht werden, in denen die abrasiven Partikel verankert sind, wobei die Haftmittel selber eine hohe Flexibilität aufweisen und somit den Formänderungen der Seele aus einem flexiblen elastischen Material folgen können. Dafür sind gummielastische bzw. elastomere Kunststoffe beispielsweise auf Silikonbasis geeignet, in denen die abrasiven Partikel einerseits gehalten werden und andererseits aus der Haftmasse so weit herausragen, dass sie eine Schneidfunktion erfüllen können.

Als abrasive Partikel werden vorzugsweise Diamantpartikel und/oder Keramikpartikel wie Korundpartikel und/oder Bornitridpartikel und/oder Borkarbidpartikel und/oder Siliziumpartikel und/oder Siliziumnitridpartikel und/oder Siliziumkarbidpartikel verwendet. Während harte Partikel wie Diamantpartikel vorzugsweise für Wurzelkanalinstrumente zum Schneiden und Schleifen eingesetzt werden, kommen weichere Körner wie Cerucide, Eisenoxide und/oder Kreidepartikel als Poliermittel zum Einsatz.

Im Fall einer elektrolytisch abgeschiedenen steifen Haftmasse beispielweise aus Bronze oder einer gesinterten steifen Haftmasse beispielsweise aus Aluminiumsintermassen ist es vorgesehen, dass die Seele beschichtete und unbeschichtete Bereiche alternierend, vorzugsweise periodisch alternierend, aufweist, so dass abschnittsweise z.B. in Art einer Gliederkette oder Spirale strukturierte Haftmassen mit abrasiven Partikeln aufgetragen sind, so dass die beschichtungsfreien Bereichen die Flexibilität des Wurzelkanalinstruments beibehalten.

Dazu kann vorzugsweise das Wurzelkanalinstrument mit einer Seele aus der Nickel-Titan-Legierung oder aus einem elektrisch leitenden Kunststoff, vorzugsweise aus einer kohlefaserverstärkten elektrisch leitenden Kunststoffmasse aufgebaut sein, die eine strukturierte Metallbeschichtung als verankernde Haftmasse mit abrasiven Partikeln aufweist. Durch die Strukturierung der vorzugsweise aus Bronze bestehenden Metallbeschichtung wird die oben erwähnte Flexibilität beibehalten, da sich die strukturierte Metallbeschichtung nur auf Teilbereiche des Mantels der flexiblen elastischen Seele des Wurzelkanalinstruments beschränkt. Diese Metallbeschichtung als verankernde Haftmasse für die abrasiven Partikel kann sowohl auf einer Seele aus der gut elektrisch leitenden Nickel-Titan-Legierung galvanisch abgeschieden werden oder auch auf einer Seele aus einer mit elektrisch leitenden Partikeln, wie Silberpartikeln, versetzten Kunststoffmasse erfolgen.

Stehen derartige Seelen aus einem elektrisch leitenden Material nicht zur Verfügung, so kann anstelle der galvanischen Metallbeschichtung auf einer Seele aus Kunststoff wie kohlefaserverstärktem Kunststoff vorzugsweise eine Haftmasse aus Kunststoff eingesetzt werden. Diese Haftmasse aus Kunststoff kann gleichzeitig die Fasern der Seele, wie Kohlefasern, zusammenhalten und die abrasiven Partikel in der Kunststoffmasse verankern, wobei die abrasiven Partikel aus der Mantelfläche des Wurzelkanalinstruments teilweise herausragen.

Dieses wird erreicht, indem die faserhaltige Seele in einem Extrusionsverfahren unter Zuführung eines extrusionsfähigen Gemisches aus Kunststoff und abrasiven Partikeln beim Spritzgießen zu einem Verbundbauteil zusammengepresst wird. Anschließend können die Spitzen der abrasiven Partikel beispielsweise durch Laserabtrag oder Lösungsabträg derart freigelegt werden, dass die abrasive Partikel in dem Kunststoff verankert bleiben. Die Flexibilität des einbettenden Kunststoffs für die Seele ist dabei in vorteilhafter Weise der Flexibilität der Seele angepaßt, ohne dass Strukturmaßnahmen der Beschichtung, wie es bei den oben erwähnten metallischen Haftmassen der Fall ist, erforderlich sind.

Außerdem kann ein Spritzgießen bzw. Extrudieren einer Mischung von Kunststoff und abrasiven Partikeln (9) erfolgen. Anschließend können die Spitzen der abrasiven Partikel (9) vom Kunststoff freigelegt werden. Alternativ kann durch ein Coextrudieren oder ein zweistufiges Spritzgießen die Kunststoffseele mit einer Mischung von Kunststoff und abrasiven Partikeln (9) ummantelt werden und anschließend können die Spitzen der abrasiven Partikel (9) vom Kunststoff freigelegt werden.

In einem Beispiel eines Wurzelkanalinstruments ist mindestens das proximale Ende der Seele unbeschichtet. Das hat den Vorteil, dass das Wurzelkanalelement der Krümmung des Wurzelkanal folgt und das unbeschichtete proximale Ende von dem umgebenden Zahnzement des Wurzelkanals geleitet wird und sich nicht durch den umgebenden Zahnzement aus dem Wurzelkanal herausbohrt. Das unbeschichtete proximale Ende führt somit das Wurzelkanalinstrument automatisch entlang des weicheren Gewebes des Wurzelkanals, ohne den umgebenden härteren Zahnzement zu verletzen. Dieser wird erst durch die dem proximalen Ende des Wurzelkanalinstruments nachfolgende abrasive Beschichtung bearbeitet, abgetragen oder poliert je nach der Größe und der Art der eingesetzten Partikel.

In einer weiteren bevorzugten Ausführungsform der Erfindung weist die Seele auf ihrer Mantelfläche eine Klebstoffbeschichtung auf, in welcher die abrasiven Partikel verankert sind und aus der die abrasiven Partikel herausragen. Eine derartige Klebstoffbeschichtung hat den Vorteil, dass unabhängig vom Material der Seele abrasive Partikel auf der Mantelfläche der Seele gehalten werden können. Das bedeutet, dass eine derartige Klebstoffschicht mit abrasiven Partikeln sowohl auf einer Seele aus einer Nickel-Titan-Legierung als auch auf einer Seele aus Kunststoff, insbesondere aus glasfaserverstärktem oder kohlefaserverstärktem Kunststoff, aufgebracht werden kann.

In einem weiteren Beispiel weist die Seele in einer Haftmasse aus Polypropylen, Polyethylen oder Epoxidharz eingebettete Kohlefasern auf, wobei die Haftmasse der Kohlefasern einen Mantel ausbildet, der die abrasiven Partikel verankert und aus dem die abrasiven Partikel herausragen. Dieser Aufbau des Wurzelkanalinstruments hat den Vorteil, dass es mit einem einzigen Spritzgussvorgang hergestellt werden kann, da die Haftmasse für die abrasiven Partikel gleichzeitig auch die Haftverbindung für die Kohlefasern bereithält.

Im Nachfolgenden werden nun unterschiedlich strukturierte Beschichtungen bereitgestellt, wenn das Haftmittel dazu neigt, die Flexibilität des Wurzelkanalinstruments zu behindern.

In solchen Fällen kann vorzugsweise das Wurzelkanalinstrument mindestens einen weiteren unbeschichteten Bereich aus ellipsenförmigem oder runden Bereichen auf der Mantelfläche der Seele aufweisen. Diese ellipsenförmigen oder runden Bereiche, die von einer Beschichtung freigehalten werden, bewirken, dass die Flexibilität durch die Beschichtung nicht wesentlich eingeschränkt wird. Darüber hinaus bleibt die Schneidleistung über einen längeren Zeitraum erhalten, da der Abtrag des Zahnmaterials die größeren Freiräume des Wurzelkanalinstruments langsamer zusetzt.

Noch günstiger sind die Verhältnisse für eine angepasste Flexibilität zwischen Beschichtung und Seele, wenn die abrasive Partikel aufweisende strukturierte Metallbeschichtung kreisförmige oder elliptische Strukturen aufweist, die von Bereichen ohne Metallbeschichtung umgeben sind. Mit dieser Beschichtungsstruktur wird eine zusammenhängende Fläche aus beschichtungsfreiem Mantelmaterial der Seele erreicht, so dass von dieser Struktur eine minimale Beeinträchtigung der Flexibilität zu erwarten ist. Erfindungsgemäß ist die Beschichtung schraubenförmig auf der Seele angeordnet und schraubenförmige Teile der Seele sind nicht beschichtet. Diese schraubenförmige Strukturierung hat den Vorteil einer in longitudinaler Richtung kontinuierlich abwechselnden Phase von beschichteten und nicht beschichteten Bereichen des Mantels der Seele. Darüber hinaus ist eine solche schraubenförmige Strukturierung der Beschichtung fertigungstechnisch ohne großen Aufwand herstellbar. Durch die schraubenförmige Struktur wird in vorteilhafter Weise das abgetragenen Zahnmaterial von apikal nach distal gefördert.

In einem Beispiel eines Wurzelkanalinstruments ist es vorgesehen, dass die Seele streifenförmig beschichtet ist, so dass sich beschichtete und unbeschichtete Streifen auf dem Mantel der Seele abwechseln. Schließlich ist es vorgesehen, dass die Beschichtung ringförmig oder ellipsenförmig die Seele umgibt, so dass sich in longitudinaler Richtung beschichtete Bereiche und unbeschichtete Bereiche ringförmig bzw. ellipsenförmig auf der Seele abwechseln. Auch diese Struktur hat einen Vorteil, weil ein ellipsenförmiger Ring den zusätzlichen Vorteil hat, dass bei einer Drehung sich keine Ringspuren in den Wurzelkanal einschleifen können.

Weiterhin ist es vorgesehen, dass die Beschichtung Rauten aufweist, die von zwei gegenläufigen schraubenstrukturierten Bereichen der Seele ohne Beschichtung umgeben sind. Eine derartige Rautenstruktur kann sehr leicht durch zwei gegenläufige Schraubenstrukturen, die in eine Beschichtung durch Abtrag eingebracht werden, erzeugt werden. Bei diesem Abtrag kann es sich um einen Laserabtrag oder andere selektive Abtrags- oder Auflöseverfahren der Haftmasse der Beschichtung handeln.

Im Nachfolgenden wird nun auf die Größenordnungen der Wurzelkanalinstrumente eingegangen, wobei eine entscheidende Größe die Länge l einer derartigen Seele ist, da sie von der Zahnkrone aus bis in das Ende des Wurzelkanals hineinreichen soll. Insofern ist die Länge l des Wurzelkanalinstruments vorzugsweise 10 bis 40 mm. Der Durchmesser d der Seele des Wurzelkanalinstruments kann sich zum proximalen Ende hin verjüngen, wobei sich jedoch über die gesamte Länge der Seele ein Durchmesser ergibt, der vorzugsweise 0,1 bis 3 mm beträgt. Für die Dicke h der Haftmasse, in der die abrasiven Partikel verankert sind, ist eine Größenordnung von 0,1 bis 50 *µ*m vorgesehen. Die Schneidleistung eines Wurzelkanalinstruments hängt deutlich von der Korngröße k der abrasiven Partikel ab. Dabei liegt die Korngröße k im Bereich von 1 bis 500 *µ*m. Je größer und/oder härter das Korn, um so höher die Abtragsrate und die Rauhigkeit der bearbeiteten Oberfläche des Wurzelkanals. Je kleiner und/oder weicher das Korn desto glatter und ebenmäßiger wird die Oberfläche des Wurzelkanals. Dabei kann durch einen hohen Politurgrad die Adhäsion von Bakterien in vorteilhafter Weise reduziert werden.

Derartige Wurzelkanalinstrumente werden vorzugsweise für die Wurzelbehandlung von Zähnen eingesetzt. Dazu ist normalerweise bereits der Zahnschmelz im oberen Bereich der Zähne teilweise zerstört, so dass das Dentin des Zahnes frei liegt und eine Möglichkeit besteht, durch das Dentin bis in die Wurzelkanäle hinein die Zahnbehandlung durchzuführen.

Ein erstes Verfahren zur Herstellung eines Wurzelkanalinstruments weist die nachfolgenden Verfahrensschritte auf. Zunächst wird eine submillimeterdicke Seele der oben angegebenen Größenordnung aus einer Nickel-Titan-Legierung oder aus einem elektrisch leitenden Kunststoff vorzugsweise einem kohlefaserverstärkten Kunststoff hergestellt. Anschließend werden die Bereiche des Mantels der Seele abgedeckt, die vor einem galvanischen Aufbringen einer Haftmasse zu schützen sind. Dazu werden vorzugsweise elektrisch isolierende Lacke selektiv aufgetragen. Anschließend wird eine wenige Mikrometer dicke Beschichtung aus einer Haftmasse mit abrasiven Partikeln auf Bereiche der Mantelfläche der Seele, die nicht von der Isolierschicht bedeckt sind, abgeschieden. Danach kann die Isolierschicht entfernt werden.

Ein derartiges Verfahren hat den Vorteil, dass in drei zuverlässigen Verfahrensschritten ein Wurzelkanalinstrument herstellbar ist, wobei mit dem ersten Verfahrensschritt die Seele hergestellt wird und mit einem zweiten Verfahrensschritt die Strukturierung vorbereitet wird und mit einem dritten Verfahrensschritt bereits die Beschichtung erfolgt.

Ein alternatives Verfahren zur Herstellung eines Wurzelkanalinstruments weist die nachfolgenden Verfahrensschritte auf. Zunächst wird wieder eine submillimetergroße Seele diesmal jedoch aus faserverstärktem nicht elektrisch leitendem Kunststoff hergestellt. Anschließend wird eine Haftmasse aus einer flexiblen Klebstoffschicht oder aus einer flexiblen Kunststoffmasse auf Teilbereiche des Mantels der Seele aufgetragen. Anschließend werden abrasive Partikel in der Haftmasse so weit verankert, dass sie aus der Haftmasse herausragen. Dieses Verfahren hat den Vorteil, dass je nach Eigenschaften der Klebstoffschicht bzw. der Kunststoffmasse, welche die abrasiven Partikel halten, eine Strukturierung vorgesehen werden kann oder nicht. Fertigungstechnisch von Vorteil ist es, wenn die Klebstoffschicht bzw. die Kunststoffmasse mit ihrer Flexibilität an die Flexibilität der Seele vollständig angepasst ist, so dass eine Strukturierung der haftvermittelnden Beschichtung für die abrasiven Partikel nicht erforderlich ist.

In einem Beispiel wird ein Co-Extrudieren oder ein Co-Spritzgießen von Kunststoff und abrasiven Partikeln auf der Kunststoffseele durchgeführt. Anschließend werden die Spitzen der abrasiven Partikel vom Kunststoff freigelegt, so dass eine hohe Schneidfähigkeit hergestellt wird. Das Co-Extrudieren bzw. Co-Spritzgießen von Haftmasse und abrasiven Partikeln vereinfacht die Fertigung und liefert relativ preiswerte Wurzelkanalinstrumente.

Weiterhin wird vorzugsweise das Herstellen einer submillimeterdicken Seele aus einem kohlefaserverstärkten Kunststoff durch vorpräparierte Pressformen bzw. Prepreg von mit Kunststoff vorbeschichteten Kohlefasern durchgeführt. Derartige Prepreg von Kohlefasern lassen sich ohne großen fertigungstechnischen Aufwand zu submillimeterdicken Seelen verarbeiten, auf die dann eine entsprechende Beschichtung mit abrasiven Partikeln aufgebracht werden kann.

Ein weiteres Durchführungsbeispiel des Verfahrens sieht vor, dass eine Haftmasse aus einer flexiblen Klebstoffschicht durch Tauchen der faserverstärkten Kunststoffseele in eine Klebstofflösung durchgeführt wird. Anschließend können durch Wälzen der klebstoffbeschichteten Seele in einem Partikelpulver abrasive Partikel aufgebracht werden, die durch Aushärten des Klebstoffs in diesem verankert werden. Auch dieses Verfahren ist für die Massenfertigung geeignet.

Die bisher erläuterten Verfahren gehen von einer runden Seele aus, die sich vorzugsweise zum proximalen Ende hin verjüngt. Das nachfolgende erfindungsgemäße Verfahren geht von einer Grundplatte aus, die zunächst beschichtet wird und anschließend in geeignete Streifen zerschnitten wird, die dann ihrerseits durch Verdrillen zu beschichteten Wurzelkanalbohrern verfeinert werden können. Dazu weist das Verfahren zur Herstellung eines Wurzelkanalinstruments die nachfolgenden Verfahrensschritte auf. Zunächst wird eine submillimeterdicke Grundplatte aus einer Titan-Nickel-Legierung oder einem faserverstärkten Kunststoff hergestellt. Anschließend wird die Grundplatte mit einer abrasive Partikel aufweisenden Beschichtung versehen. Schließlich wird die Grundplatte in langgestreckte Streifen mit viereckigem oder dreieckigem Querschnitt derart aufgetrennt, dass Schmalseiten der viereckigen Querschnitte oder eine Seite der dreieckigen Querschnitte die Beschichtung aufweisen. Danach erfolgt ein Verdrillen der Streifen zu einem Wurzelkanalbohrer mit Schneidkanten, die abrasive Partikel aufweisen. Dieses Verfahren hat den Vorteil, dass es erfindungsgemäße Wurzelkanalbohrer liefert, die es in ihrer Schneidleistung mit Chromstahlbohrern aufnehmen können und dennoch flexibel genug sind, um in einen Wurzelkanal eingeführt zu werden.

Vorzugsweise weisen die viereckigen Querschnitte ein Rechteck oder ein Parallelogramm auf. Das Parallelogramm entsteht dann, wenn die Trennfuge in die beschichtete Grundplatte nicht vertikal zur Oberfläche eingebracht wird, sondern schräg oder geneigt zur Oberfläche. Nach dem Auftrennen können die Streifen mit einem Rechteck und/oder einem Parallelogramm und/oder einem Dreieck als Querschnitt verdrillt werden, wobei das Parallelogramm den Vorteil hat, dass es deutlich hervorragende Schneidkanten beim Verdrillen liefert.

Zum Beschichten der Grundplatte kann die Kunststoffmasse mit abrasiven Partikeln auf beiden Seiten aufgebracht werden, so dass die Schneidleistung des Wurzelkanalbohrers weiter vergrößert wird. Zum Beschichten kann in einem entsprechenden Elektrolytbad eine galvanische Abscheidung auf der Submillimeterplatte erfolgen. Dieses hat den Vorteil, dass für eine Vielzahl von Wurzelkanalbohrern das Beschichten gleichzeitig möglich ist. Die mittlere Korngröße k der abrasiven Partikel liegt dabei im Bereich von 1 bis 500 µm. Das Trennen in langgestreckte Streifen der präparierten Grundplatte erfolgt vorzugsweise durch luftgelagerte Hochgeschwindigkeitssägen mit Diamantsägeblättern einer Dicke mit bis zu 100 *µ*m und einer Schneidtiefe t mit t bis zu 1 mm.

Die Erfindung wird nun anhand der beigefügten Figuren näher erläutert.
- Figur 1: zeigt eine Prinzipskizze eines Wurzelkanalinstruments gemäß einem ersten Beispiel im Einsatz;
- Figur 2: zeigt eine vergrößerte Prinzipskizze des Wurzelkanalinstruments gemäß Figur 1;
- Figur 3: zeigt eine Prinzipskizze eines Wurzelkanalinstruments gemäß einem zweiten Beispiel;
- Figur 4: zeigt eine Prinzipskizze eines Wurzelkanalinstruments gemäß einem dritten Beispiel;
- Figur 5: zeigt eine Prinzipskizze eines Wurzelkanalinstruments gemäß einem vierten Beispiel;
- Figur 6: zeigt eine Prinzipskizze eines Wurzelkanalinstruments gemäß einem fünften Beispiel;
- Figur 7: zeigt eine Prinzipskizze eines Wurzelkanalinstruments gemäß einem sechsten Beispiel;
- Figur 8: zeigt eine Prinzipskizze eines Wurzelkanalinstruments gemäß einer Ausführungsform der Erfindung;
- Figur 9: zeigt einen schematischen Querschnitt durch das Wurzelkanalinstrument gemäß Figur 8 entlang der Schnittlinie A-A in Figur 8;
- Figur 10: zeigt einen schematischen Querschnitt durch eine Variante des Wurzelkanalinstruments gemäß Figur 8 entlang der Schnittlinie A-A in Figur 8;
- Figur 11: zeigt einen schematischen Querschnitt durch eine weitere Variante des Wurzelkanalinstruments gemäß Figur 8 entlang der Schnittlinie A-A in Figur 8;
- Figur 12: zeigt eine Prinzipskizze eines Wurzelkanalinstruments gemäß einem anderen Beispiel.

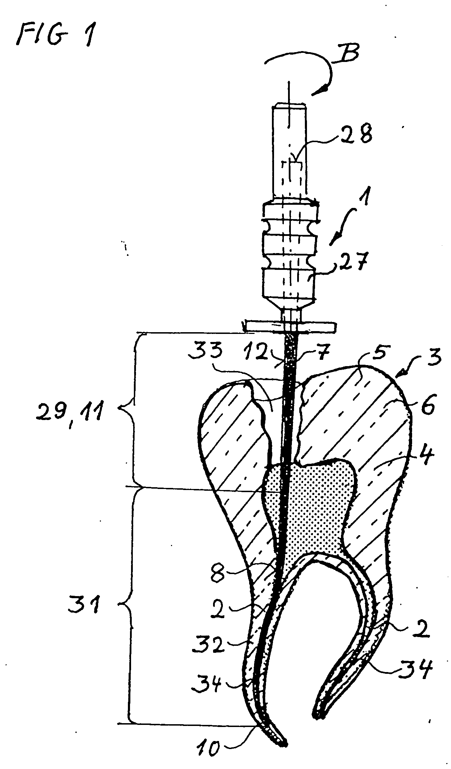

Figur 1 zeigt eine Prinzipskizze eines Wurzelkanalinstruments 1 gemäß einem ersten Beispiel im Einsatz. Das Wurzelkanalinstrument 1 weist eine Steckkupplung 27 zu einem nicht gezeigten Antriebsgerät, das eine drehmomentgesicherte Rotation in Drehrichtung B auf die Steckkupplung 27 ausübt. Ferner weist das Wurzelkanalinstrument 1 eine schlanke, sich zum proximalen Ende 10 des Wurzelkanalinstruments 1 hin verjüngende Seele 7 auf. Diese Seele 7 ist mit ihrem distalen Ende 28 in das Material der Steckkupplung 27 form- und kraftschlüssig eingebettet. In einem oberen distalen Bereich 29 ist die Mantelfläche 12 der Seele 7 unbeschichtet und in einem unteren proximalen Bereich 31 weist die Seele 7 eine Beschichtung 8 mit abrasiven Partikeln auf.

Ein derartiges Wurzelkanalinstrument 1 wird durch eine Öffnung 33 im Zahnschmelz 5 der Zahnkrone 6 eines Zahnes 3 und durch das Dentin 4 zu einer Zahnwurzel 34 geführt und folgt aufgrund seiner hohen Flexibilität der Krümmung des Zahnwurzelkanals 2. Dazu bleibt das proximale Ende 10 des Wurzelkanalinstruments 1 frei von einer Beschichtung 8 mit entsprechenden abrasiven Partikeln, um sicherzustellen, dass das proximale Ende 10 des Wurzelkanalinstruments 1 den mit abrasiven Partikeln besetzten unteren proximalen Bereich 31 der Seele 7 durch das gegenüber dem Zahnzement 32 weichere Material des Zahnwurzelkanals 2 entlang seiner Krümmung zu führen, ohne aufgrund der Dreh- und Schleifbewegung des Wurzelkanalinstruments 1 das umgebende Dentin 4 und den Zahnzement 32 vorzeitig zu durchstoßen und der Krümmung des Wurzelkanals 2 nicht zu folgen.

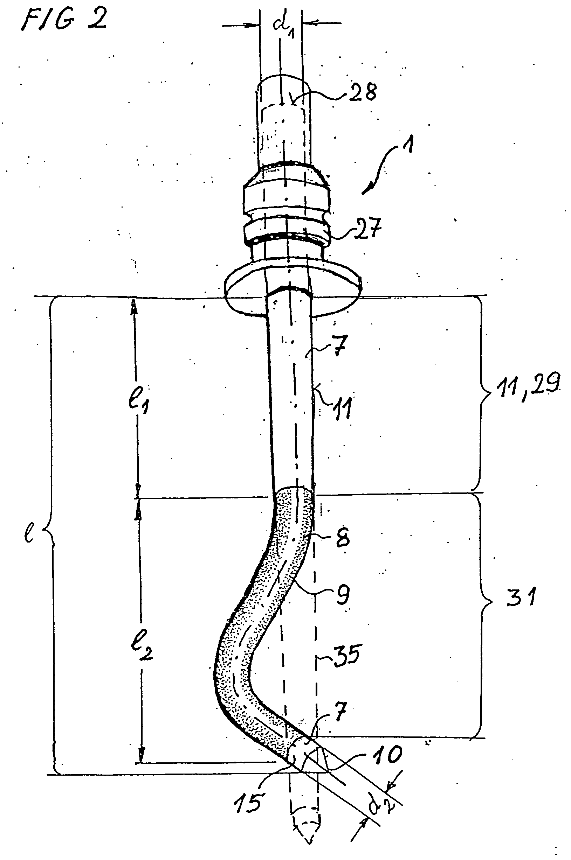

Figur 2 zeigt eine vergrößerte Prinzipskizze des Wurzelkanalinstruments 1 gemäß Figur 1. Bei diesem Wurzelkanalinstrument 1 ist die Seele 7 in dem oberen distalen Bereich 29 frei von einer Beschichtung 8 mit abrasiven Partikeln 9 auf einer Länge l₁ der Gesamtlänge l der Seele 7 des Wurzelkanalinstruments 1. Der Durchmesser d₁ am distalen Ende 28, das in der Steckkupplung 27 eingebettet ist, beträgt 0,1 bis 3 mm. Der beschichtungsfreie Bereich 11 im oberen distalen Bereich 29 weist eine Länge l₁ von etwa 5 mm auf, während der mit abrasiven Partikeln besetzte Bereich eine Länge l₂ von vorzugsweise 0,5 bis 25 mm beträgt. Die Seele 7 verjüngt sich zum unbeschichteten Bereich 15 des proximalen Endes 10 hin auf einen Durchmesser d₂, wobei der Durchmesser d₂ 0,1 bis 1,2 mm beträgt.

Die Seele 7 ist in diesem Beispiel aus einem kohlefaserverstärktem Kunststoff aufgebaut, wobei der Kunststoff auf der Mantelfläche 12 der Seele 7 im unteren proximalen Bereich 31 die abrasiven Partikel 9 derart verankert, dass sie aus der Mantelfläche 12 des Kunststoffes herausragen. Der Kunststoff, welcher die Kohlefasern der Seele zusammenhält, dient somit gleichzeitig zur Verankerung von abrasiven Partikeln 9 auf der Mantelfläche 12 im unteren proximalen Bereich 31 des Wurzelkanalinstruments 1. Damit wird erreicht, dass die Flexibilität der Beschichtung 8 mit abrasiven Partikeln 9 an die Flexibilität der Seele 7 optimal angepasst ist.

Die in Figur 2 sichtbare Krümmung des unteren proximalen Bereichs 31 der mit abrasiven Partikeln beschichteten Seele 7 folgt der Krümmung eines Wurzelkanals und zeigt nicht das Wurzelkanalinstrument 1 in seiner Ruhelage. In der Ruhelage findet das Wurzelkanalinstrument 1 aufgrund der Superelastizität der Kohlefasern zurück in seine langgestreckte gradlinige Ausgangsform, die hier mit einer gestrichelten Linie 35 gezeigt wird.

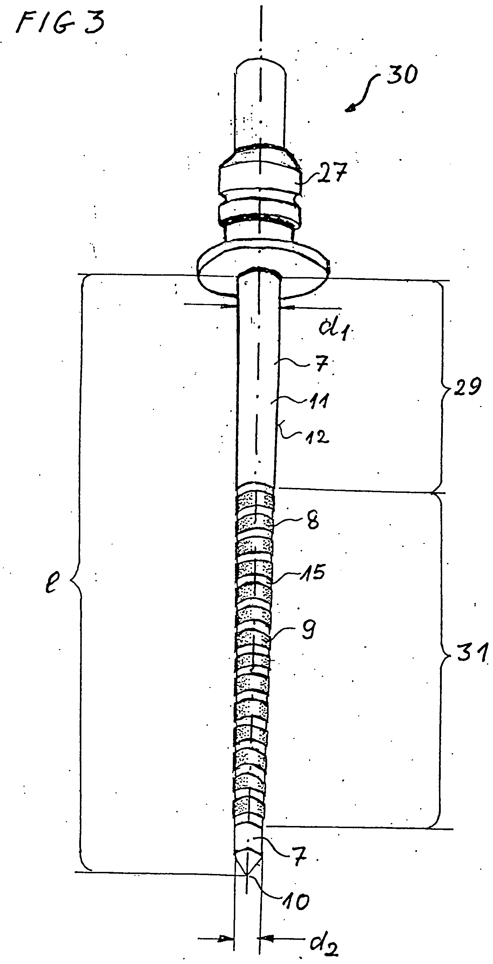

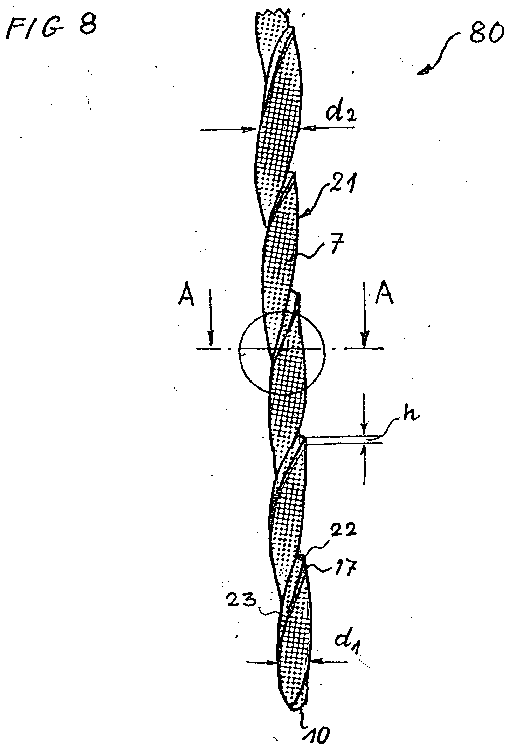

Die Figuren 3 bis 7 zeigen unterschiedliche Beispiele von Wurzelkanalinstrumenten und die Figur 8 zeigt eine Ausführungsform der Erfindung, insbesondere in Bezug auf die Strukturierung der Beschichtung 8 im unteren proximalen Bereich 31 des Wurzelkanalinstruments 1. Komponenten mit gleichen Funktionen wie in den Figuren 1 und 2 werden in den Figuren 3 bis 8 mit gleichen Bezugszeichen gekennzeichnet und nicht extra erläutert. Figur 3 zeigt eine Prinzipskizze eines Wurzelkanalinstruments 30 gemäß einem zweiten Beispiel. Dieses Wurzelkanalinstrument 30 weist eine Seele 7 auf, die aus einem elektrisch leitenden Material besteht.

Dieses elektrisch leitende Material kann eine Nickel-Titan-Legierung sein mit etwa 45 Gew.% Nickel und etwa 55 Gew.% Titan, die sich durch ihre Superelastizität auszeichnet, die dadurch gekennzeichnet ist, dass zusätzlich zu der Hook'schen-Elastizität, wie sie von Chromkohlenstoffstählen bekannt ist, eine zusätzliche Elastizität aufgrund des Formengedächtnisses dieser Legierung hinzukommt, bei der sich vorübergehend aufgrund der mechanischen Belastung durch Verformungen ein hexagonales Gefüge, genannt Martensit, in dem kubischen Wirtsgefüge, genannt Austenit, ausbildet, wobei sich jedoch bei Entlastung des martensitische Gefüge wieder in das Wirtsgefüge zurückbildet.

Auf derartigen metallischen Materialien für die Seele 7 kann galvanisch eine Metallbeschichtung als Haftmittel für die abrasiven Partikel 9 abgeschieden werden, wobei mit der galvanischen Abscheidung gleichzeitig die abrasiven Partikel 9 auf der Mantelfläche 12 der Seele 7 abgeschieden werden. Um die in Figur 3 gezeigte ringförmige Struktur der abgeschiedenen Beschichtung zu erreichen, können die unbeschichteten Bereiche 15, die ebenfalls in dieser Ausführungsform ringförmig sind, mit einer isolierenden Schicht in dem Galvanikbad geschützt werden. Die isolierende Schicht kann anschließend nach der Abscheidung der ringförmig strukturierten Beschichtung 8 entfernt werden.

Anstelle einer metallischen Seele 7 kann auch eine Seele 7 aus Kunststoff für die galvanische Abscheidung präpariert werden, indem entweder die Mantelfläche 12 mit leitenden Partikeln durch beispielsweise Sputtern beschichtet wird oder der Kunststoff mit metallischen Partikeln wie Silber gefüllt ist und somit eine elektrisch leitende Seele 7 darstellt. Anstelle der kreisförmigen Ringe der strukturierten Beschichtung 9 in Figur 3 können auch ellipsenförmige Ringe auf dem Mantel 12 der Seele abgeschieden werden.

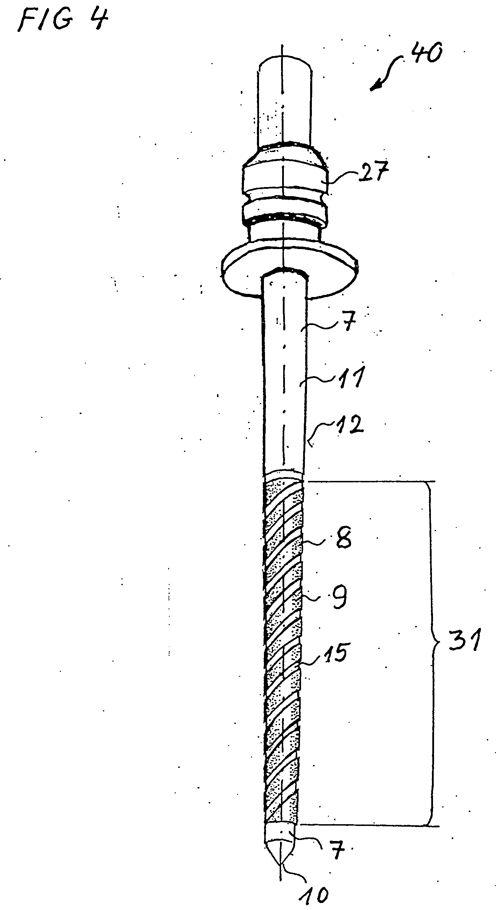

Figur 4 zeigt eine Prinzipskizze eines Wurzelkanalinstruments 40 gemäß einem dritten Beispiel. In diesem Fall ist die Flexibilität der Beschichtung 8 an die Flexibilität der Seele 7 durch eine schraubenförmige Struktur der Beschichtung 8 angepasst. Es wechselt sich somit eine schraubenförmige beschichtete Struktur mit schraubenförmigen unbeschichteten Bereichen 15 im unteren proximalen Bereich 31 des Wurzelkanalinstruments 40 ab.

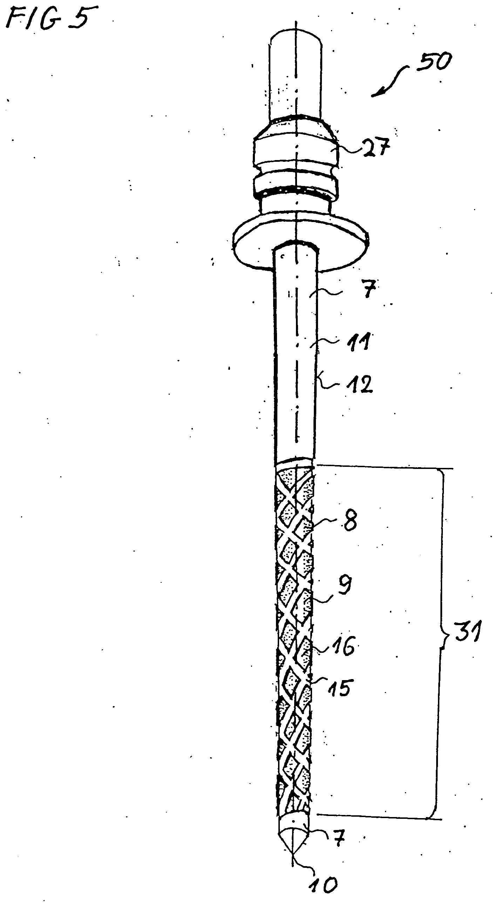

Figur 5 zeigt eine Prinzipskizze eines Wurzelkanalinstruments 50 gemäß einem vierten Beispiel. In diesem Fall wurde die Beschichtung 8 dahingehend strukturiert, dass Rauten 16 mit abrasiven Partikeln belegt sind, die von zwei gegenläufigen schraubenförmigen unbeschichteten Bereichen 15 umgeben werden. Dieses mit Rauten 16 besetzte Muster der Beschichtung 8 ist durch geeignete Vorbereitung, wie sie bereits für die Figur 4 besprochen wurde, herstellbar.

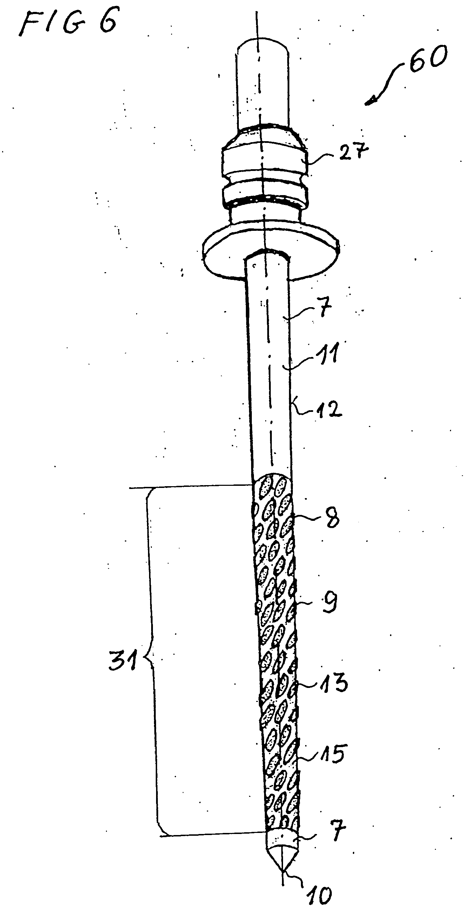

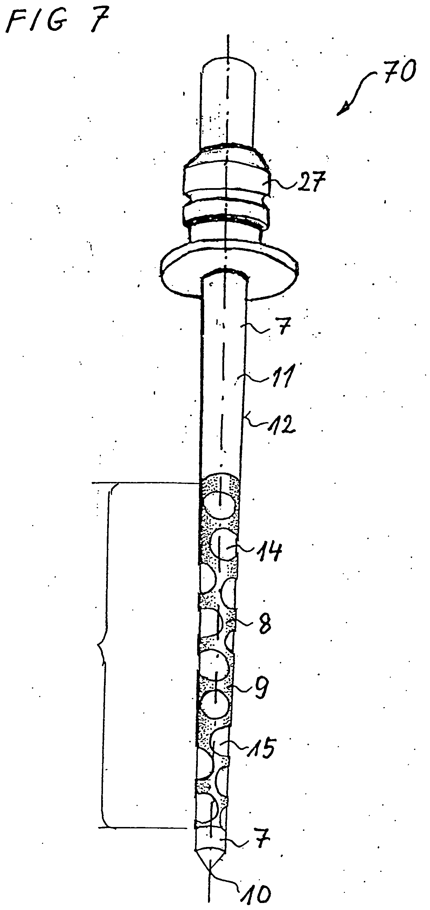

Figur 6 zeigt eine Prinzipskizze eines Wurzelkanalinstruments 60 gemäß einem fünften Beispiel. In diesem Fall sind ellipsenförmige Inseln 13, die von Bereichen ohne Beschichtung 15 umgeben sind, mit abrasiven Partikeln besetzt. Dabei bilden die unbeschichteten Bereiche 15 einen zusammenhängenden Bereich, was die Flexibilität dieses Wurzelkanalinstruments verbessert. Figur 7 zeigt eine Prinzipskizze eines Wurzelkanalinstruments 70 gemäß einem sechsten Beispiel. Bei diesem Beispiel wurden in der Beschichtung 8 kreisförmige runde Bereiche 14 frei von einer Partikelbeschichtung gehalten. Durch diese unbeschichteten kreisförmigen Bereiche 14 kann ebenfalls die Flexibilität der Beschichtung 8 an die Flexibilität der Seele 7 angepasst werden.

Prinzipiell sind auch Mischformen der Beschichtungsstrukturen, wie sie in den Figuren 2 bis 7 gezeigt werden möglich.

Figur 8 zeigt eine Prinzipskizze eines Wurzelkanalinstruments 80 gemäß einer Ausführungsform der Erfindung. In diesem Fall wird bei der Herstellung der Seele 7 nicht von einem vorgefertigten, sich zum proximalen Ende 10 hin verjüngenden konischen Stab als Seele ausgegangen, sondern es wird aus einer mit dem Seelenwerkstoff, wie einer Nickel-Titan-Legierung und/oder einem Kunststoff hergestellten Grundplatte ausgegangen. Die Grundplatte wird einseitig oder beidseitig mit einer abrasive Partikel aufweisenden Haftmasse 17 beschichtet. Anschließend kann diese Grundplatte in Streifen mit rechteckförmigem oder parallelogrammartigem oder dreieckigem Querschnitt getrennt werden. Durch Verdrillen der Streifen kann dann das in Figur 8 gezeigte Wurzelkanalinstrument 80 mit einem Wurzelkanalbohrer 21 hergestellt werden. Prinzipiell ist es auch möglich, erst die Streifen aus einer unbeschichteten Nickel-Titan-Platte herzustellen und dann die Beschichtung vorzunehmen und schließlich die Streifen oder Stäbe zu verdrillen.

Dazu wird im Falle einer kohlefaserverstärkten Kunststoffgrundplatte ein thermoplastischer Kunststoff eingesetzt, der für das Verdrillen nach Herstellung der Streifen erwärmt wird. Beim Verdrillen eines metallischen Streifens aus einer Nickel-Titan-Legierung wird dieser ebenfalls erwärmt, um das austenitische Gefüge beizubehalten. Durch das Beschichten der Grundplatte mit partikelngefüllter Haftmasse 17 in einer Dicke h mit 0,5 bis 50 *µ*m wird mit diesem Wurzelkanalbohrer 21 ein Wurzelkanalinstrument 80 verwirklicht, das auf seinen Schneidkanten 22 und 23 abrasive Partikel aufweist.

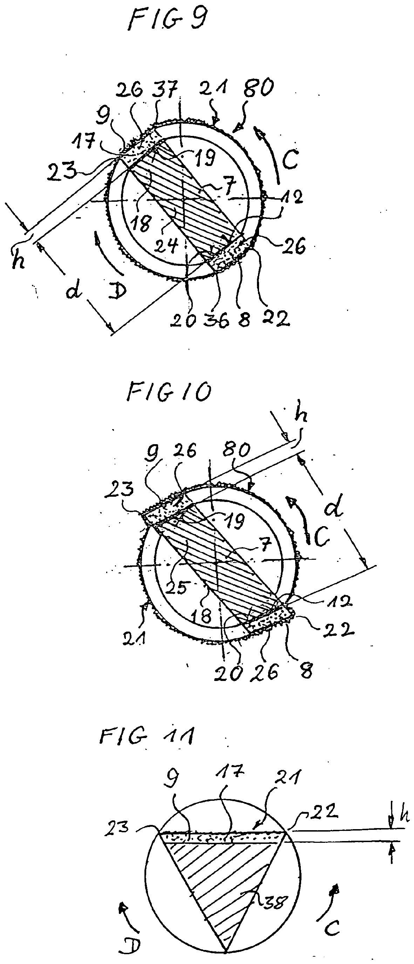

Figur 9 zeigt einen schematischen Querschnitt durch das Wurzelkanalinstrument 80 entlang der Schnittlinie A-A in Figur 8. Der viereckige Querschnitt 18 in Form eines Rechtecks 24 mit den Schmalseiten 19 und 20 entsteht durch Auftrennen der Grundplatte in einzelne Streifen, wobei die Sägerichtung senkrecht zu den Beschichtungen 8 durchgeführt wird. Damit beide Schmalseiten 19 und 20 mit abrasiven Partikeln 9 belegt sein können, wird die Grundplatte beidseitig mit einer Haftmasse 17, die abrasive Partikel 9 aufweist, beschichtet. Die Haftmasse 17 kann eine Bronzeschicht 26 sein, in der die abrasiven Partikel 9 eingebettet sind. Durch die abrasiven Partikel 9 werden die Schneidkanten 22 und 23 beim Drehen des Wurzelkanalbohrers 21 in Pfeilrichtung C wirksam, während in der Gegenrichtung D die gegenüber liegenden Schneidkanten 36 und 37 einen Abtrag bewirken.

Figur 10 zeigt einen schematischen Querschnitt durch eine Variante des Wurzelkanalinstruments 80 gemäß Figur 8 entlang der Schnittlinie A-A in Figur 8. Komponenten mit gleichen Funktionen wie in den Figur 9 werden mit gleichen Bezugszeichen gekennzeichnet und nicht extra erläutert.

Der Unterschied bei dieser Variante besteht in dem viereckigen Querschnitt 18 der Seele des Wurzelkanalbohrers 21. Dieser Querschnitt weist ein Parallelogramm 25 auf, das dadurch entsteht, dass die Grundplatte mit beidseitiger Beschichtung einer Haftmasse 17 in einem Neigungswinkel gegenüber den Beschichtungen zu Streifen durchtrennt wird. In dieser Ausführungsform der Erfindung wird eine Schneidwirkung des Wurzelkanalbohrers 21 lediglich in der Drehrichtung C erreicht, bei der die Schneidkanten 22 und 23 mit ihren abrasiven Partikeln 9 den Abtrag fördern.

Derartige mit abrasiven Partikeln 9 auf ihren Schneidkanten 22 und 23 besetzte Wurzelkanalbohrer 21 übertreffen in ihrer Abtragswirkung die aus dem Stand der Technik bekannten Wurzelkanalbohrer aus einer Nickel-Titan-Legierung, die aufgrund ihrer verminderten Vikkershärte Nachteile in der Abtragsrate gegenüber Chromkohlenstoffstählen aufweisen. Somit wird mit diesem Wurzelkanalinstrument in idealer Weise die hohe Flexibilität von Nickel-Titan-Legierungen und/oder von Kunststoffen mit dem hohen Schneid- und Poliervermögen von abrasiven Partikeln zu einem neuen wirkungsvollen Wurzelkanalinstrument verbunden.

Figur 11 zeigt einen schematischen Querschnitt durch eine Variante des Wurzelkanalinstruments 80 gemäß Figur 8 entlang der Schnittlinie A-A in Figur 8. Komponenten mit gleichen Funktionen wie in den Figur 8, 9 oder 10 werden mit gleichen Bezugszeichen gekennzeichnet und nicht extra erläutert.

Der Unterschied bei dieser dritten Variante besteht in dem dreieckgen Querschnitt 18 der Seele des Wurzelkanalbohrers 21. Dieser Querschnitt weist ein Dreieck 38 auf, das dadurch entsteht, dass die Grundplatte mit beidseitiger Beschichtung einer Haftmasse 17 in zwei entgegengesetzten Neigungswinkeln gegenüber den Beschichtungen zu Streifen durchtrennt wird. In dieser Ausführungsform der Erfindung wird eine Schneidwirkung des Wurzelkanalbohrers 21 sowohl in der Drehrichtung C als auch in der Drehrichtung D erreicht, bei der die Schneidkanten 22 und 23 mit ihren abrasiven Partikeln 9 den Abtrag fördern.

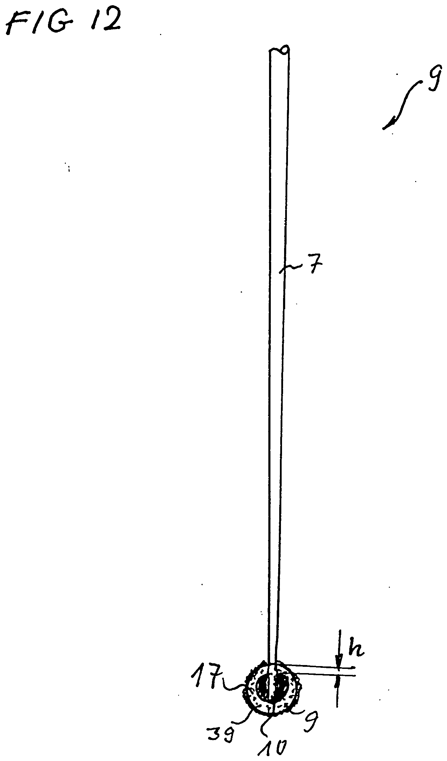

Figur 12 zeigt eine Prinzipskizze eines Wurzelkanalinstruments 90 gemäß einem anderen Beispiel. Das Wurzelkanalinstrument 90 besitzt eine Seele (7) aus einem flexiblen elastischen Material mit Formengedächtnis. An seinem proximale Ende 10 ist ein Schleif- oder Polierkörper 39 angeordnet, der abrasive Partikel 9 aufweist. Dieser Schleif- oder Polierkörper 39 ist ein Teil der Seele (7) oder ist an die Seele 7 angeschraubt, angeklebt, angelötet oder angeschweißt oder ist auf dem proximalen Ende 10 der Seele 7 galvanisch abgeschieden oder spritzgusstechnisch auf das proximale Ende 10 aufgebracht.

### Bezugszeichenliste

- 1: Wurzelkanalinstrument
- 2: Wurzelkanal
- 3: Zahn
- 4: Dentin
- 5: Zahnschmelz
- 6: Zahnkrone
- 7: Seele
- 8: Beschichtung
- 9: abrasive Partikel
- 10: proximales Ende
- 11: weiterer unbeschichteter Bereich
- 12: Mantelfläche der Seele
- 13: ellipsenförmige Insel
- 14: runder Bereich
- 15: Bereich ohne Beschichtung
- 16: Raute
- 17: Haftmasse
- 18: viereckiger Querschnitt
- 19: Schmalseite
- 20: Schmalseite
- 21: Wurzelkanalbohrer
- 22: Schneidkante
- 23: Schneidkante
- 24: Rechteck
- 25: Parallelogramm
- 26: Bronzeschicht
- 27: Steckkupplung
- 28: distales Ende
- 29: oberer distaler Bereich
- 30: Wurzelkanalinstrument (2. Ausführungsform)
- 31: unterer proximaler Bereich
- 32: Zahnzement
- 33: Öffnung
- 34: Zahnwurzel
- 35: gestrichelte Linie
- 36: Schneidkante
- 37: Schneidkante
- 38: Dreieck
- 39: Schleif- oder Polierköper

- 40: Wurzelkanalinstrument (3. Ausführungsform)
- 50: Wurzelkanalinstrument (4. Ausführungsform)
- 60: Wurzelkanalinstrument (5. Ausführungsform)
- 70: Wurzelkanalinstrument (6. Ausführungsform)
- 80: Wurzelkanalinstrument (7. Ausführungsform)
- 90: Wurzelkanalinstrument (8. Ausführungsform)

- A-A: Schnittlinie
- B: Drehrichtung
- C: Drehrichtung
- D: Drehrichtung
- d: Durchmesser der Seele
- d₁: Durchmesser der Seele am distalen Ende
- d₂: Durchmesser der Seele am proximalen Ende
- h: Dicke der Haftmasse
- l: Länge der Seele
- l₁: Länge der Seele im distalen Bereich
- l₂: Länge der Seele im proximalen Bereich

## Patentansprüche

1. Verfahren zur Herstellung eines Wurzelkanalinstruments (1), wobei das Verfahren folgende Verfahrensschritte aufweist:
- Herstellen einer submillimeterdicken Grundplatte aus einer Titan-Nickellegierung oder aus einem Kunststoff, wie einem kohlefaserverstärkten Kunststoff;
- Beschichten der Grundplatte mit einer abrasive Partikel (9) aufweisenden Beschichtung (8);
- Trennen der Grundplatte in langgestreckte Streifen mit viereckigem oder dreieckigem Querschnitt (18) derart, dass mindestens eine Seite (19, 20) des viereckigen oder dreieckigen Querschnitts (18) die Beschichtung (8) aufweist;
- Verdrillen der Streifen zu einem Wurzelkanalbohrer (21) mit abrasiven Partikeln besetzte Schneidkante (22, 23).

2. Verfahren nach Anspruch 1, wobei der viereckige Querschnitt (18), als ein Rechteck (24), ein Dreieck oder ein Parallelogramm (25) aus der Grundplatte dadurch entsteht, dass ein Sägeblatt einer Hochgeschwindigkeits-Diamantsäge orthogonal oder schräg zur Oberseite der Grundplatte eingestellt wird.

3. Verfahren nach Anspruch 1 oder Anspruch 2, wobei zum Beschichten eine Kunststoffmasse (17) mit abrasiven Partikeln aufgebracht wird.

4. Verfahren nach einem der Ansprüche 1 bis 3, wobei zum Beschichten eine Bronzeschicht(26) mit abrasiven Partikeln galvanisch auf einer elektrisch leitfähigen submillimeterdicken Grundplatte abgeschieden wird.

5. Verfahren nach einem der Ansprüche 1 bis 3, wobei mit dem Beschichten abrasive Partikel (9) mit einer mittleren Korngröße k von 1 bis 500 µm aufgebracht und in der Beschichtung (8) verankert werden.

6. Verfahren nach einem der Ansprüche 1 bis 3, wobei beim Trennen eine luftgelagerte Hochgeschwindigkeitssäge mit Diamantsägeblättern einer Dicke kleiner gleich 100 µm und einer Schneidtiefe von bis zu 1 mm eingesetzt wird.

7. Wurzelkanalinstrument (1), umfassend einen verdrillten Streifen aus einer Titan-Nickellegierung oder aus einem Kunststoff, mit einem viereckigen oder dreieckigen Querschnitt (18), wobei eine oder zwei Seiten (19, 20) eine Beschichtung (8) mit abrasiven Partikeln (9) aufweisen, erhältlich durch ein Verfahren nach einem der Ansprüche 1 bis 6.

8. Wurzelkanalinstrument (1) nach Anspruch 7, wobei die Beschichtung (8) mit abrasiven Partikeln (9) eine Haftmasse (17) mit abrasiven Partikeln (9) ist, die aus einer Kunststoffmasse (17) mit abrasiven Partikeln (9) oder aus einer Bronzeschicht (26) mit abrasiven Partikeln (9) ausgewählt wird.

9. Wurzelkanalinstrument (1) nach Anspruch 8, wobei die Haftmasse (17) mit abrasiven Partikeln (9) eine Dicke h von 0,5 bis 50 µm aufweist.

10. Wurzelkanalinstrument (1) nach einem der Ansprüche 7 bis 9, wobei die abrasiven Partikel (9) eine mittlere Korngröße k von 1 bis 500 µm aufweisen.

11. Wurzelkanalinstrument (1) nach einem der Ansprüche 7 bis 10, wobei der viereckige Querschnitt (18) in Form eines Rechtecks (24) oder in Form eines Parallelogramms (25) ist.

12. Wurzelkanalinstrument (1) nach einem der Ansprüche 7 bis 11, wobei der viereckige Querschnitt (18) in Form eines Rechtecks (24) ist und beide Schmalseiten (19, 20) eine Beschichtung (8) mit abrasiven Partikeln (9) aufweisen.

13. Wurzelkanalinstrument (1) nach einem der Ansprüche 7 bis 11, wobei der viereckige Querschnitt (18) in Form eines Parallelogramms (25) ist und zwei gegenüberliegende Seiten (19, 20) eine Beschichtung (8) mit abrasiven Partikeln (9) aufweisen.

14. Wurzelkanalinstrument (1) nach einem der Ansprüche 7 bis 11 mit einem dreieckigen Querschnitt (38), wobei eine der Seiten eine Beschichtung (8) mit abrasiven Partikeln (9) aufweist.

## Claims

1. Method for the production of a root canal instrument (1), the method comprising the following method steps:
- producing a sub-millimetre thick base plate from a titanium-nickel alloy or from a plastics material, such as a carbon-fibre-reinforced plastics material;
- coating the base plate with a coating (8) comprising abrasive particles (9);
- dividing the base plate into longitudinally extending strips having a four-sided or three-sided cross-section (18) in such a manner that at least one side (19, 20) of the four-sided or three-sided cross-section (18) has the coating (8); and
- twisting the strips to form a root canal drill bit (21) having a cutting edge (22, 23) occupied by abrasive particles.

2. Method according to claim 1, wherein the four-sided cross-section (18) in the form of a rectangle (24), a triangle or a parallelogram (25) is formed from the base plate as a result of a saw blade of a high-speed diamond saw being set orthogonally or on a slant with respect to the upper face of the base plate.

3. Method according to claim 1 or claim 2, wherein, for the coating, a plastics mass (17) comprising abrasive particles is applied.

4. Method according to one of claims 1 to 3, wherein, for the coating, a bronze layer (26) comprising abrasive particles is electrodeposited on an electrically conductive sub-millimetre thick base plate.

5. Method according one of claims 1 to 3, wherein, with the coating, abrasive particles (9) having a mean particle size k of from 1 to 500 µm are applied and anchored in the coating (8).

6. Method according to one of claims 1 to 3, wherein in the course of the division there is used a high-speed saw having air bearings and diamond saw blades of a thickness less than or equal to 100 µm and a cutting depth of up to 1 mm.

7. Root canal instrument (1), comprising a twisted strip made from a titanium-nickel alloy or from a plastics material, having a four-sided or three-sided cross-section (18), one or two sides (19, 20) having a coating (8) comprising abrasive particles (9), which is obtainable by a method according to one of claims 1 to 6.

8. Root canal instrument (1) according to claim 7, wherein the coating (8) comprising abrasive particles (9) is an adhesion-producing mass (17) comprising abrasive particles, which is selected from a plastics mass (17) comprising abrasive particles (9) or a bronze layer (26) comprising abrasive particles (9).

9. Root canal instrument (1) according to claim 8, wherein the adhesion-producing mass (17) comprising abrasive particles (9) has a thickness h of from 0.5 to 50 µm.

10. Root canal instrument (1) according to one of claims 7 to 9, wherein the abrasive particles (9) have a mean particle size k of from 1 to 500 µm.

11. Root canal instrument (1) according to one of claims 7 to 10, wherein the four-sided cross-section (18) is in the form of a rectangle (24) or in form of a parallelogram (25).

12. Root canal instrument (1) according to one of claims 7 to 11, wherein the four-sided cross-section (18) is in the form of a rectangle (24) and both narrow sides (19, 20) have a coating (8) comprising abrasive particles (9) .

13. Root canal instrument (1) according to one of claims 7 to 11, wherein the four-sided cross-section (18) is in the form of a parallelogram (25) and two opposing sides (19, 20) have a coating (8) comprising abrasive particles (9).

14. Root canal instrument (1) according to one of claims 7 to 11, having a triangular cross-section (38), wherein one of the sides has a coating (8) comprising abrasive particles (9).

## Revendications

1. Procédé de fabrication d'un instrument pour canal radiculaire (1), le procédé comprenant les étapes suivantes :
- fabriquer une plaque de base d'épaisseur submillimétrique faite d'un alliage de titane et de nickel ou d'une matière plastique, telle qu'une matière plastique renforcée par des fibres de carbone ;
- revêtir la plaque de base d'un revêtement (8) présentant des particules abrasives (9) ;
- séparer la plaque de base en bandes allongées présentant une section transversale (18) quadrangulaire ou triangulaire, de telle manière qu'au moins une face (19, 20) de la section transversale (18) triangulaire ou quadrangulaire présente le revêtement (8) ;
- torsader les bandes de manière à obtenir un foret pour canal radiculaire (21) présentant un bord de coupe (22, 23) doté de particules abrasives.

2. Procédé selon la revendication 1, dans lequel la section transversale (18) quadrangulaire est obtenue sous la forme d'un rectangle (24), d'un triangle ou d'un parallélogramme (25) à partir de la plaque de base par le fait qu'une lame de scie d'une scie diamantée à grande vitesse est réglée de manière perpendiculaire ou en biais par rapport à la face supérieure de la plaque de base.

3. Procédé selon la revendication 1 ou la revendication 2, dans lequel une masse de matière plastique (17) pourvue de particules abrasives est appliquée aux fins de revêtement.

4. Procédé selon l'une quelconque des revendications 1 à 3, dans lequel une couche de bronze (26) pourvue de particules abrasives est déposée sur une plaque de base d'une épaisseur submillimétrique électro-conductrice aux fins de revêtement.

5. Procédé selon l'une quelconque des revendications 1 à 3, dans lequel des particules abrasives (9) d'une granulométrie k moyenne de 1 à 500 µm sont appliquées au cours du revêtement (8) et ancrées dans le revêtement (8).

6. Procédé selon l'une quelconque des revendications 1 à 3, dans lequel une scie à grande vitesse sur coussin d'air présente des lames de scie diamantée d'une épaisseur inférieure ou égale à 100 µm et une profondeur de coupe allant jusqu'à 1 mm est utilisée lors de la séparation.

7. Instrument pour canal radiculaire (1), comprenant une bande torsadée faite d'un alliage de titane et de nickel ou d'une matière plastique, présentant une section transversale (18) quadrangulaire ou triangulaire, dans lequel une ou deux faces (19, 20) présentent un revêtement (8) pourvu de particules abrasives (9), pouvant être obtenu par un procédé selon l'une quelconque des revendications 1 à 6.

8. Instrument pour canal radiculaire (1) selon la revendication 7, dans lequel le revêtement (8) pourvu de particules abrasives (9) est une masse adhésive (17) pourvue de particules abrasives (9), qui est sélectionnée parmi une masse de matière plastique (17) pourvue de particules abrasives (9) ou une couche de bronze (26) pourvue de particules abrasives (9).

9. Instrument pour canal radiculaire (1) selon la revendication 8, dans lequel la masse adhésive (17) pourvue de particules abrasives (9) présente une épaisseur h de 0,5 à 50 µm.

10. Instrument pour canal radiculaire (1) selon l'une quelconque des revendications 7 à 9, dans lequel les particules abrasives (9) présentent une granulométrie k moyenne de 1 à 500 µm.

11. Instrument pour canal radiculaire (1) selon l'une quelconque des revendications 7 à 10, dans lequel la section transversale (18) quadrangulaire se présente sous la forme d'un rectangle (24) ou sous la forme d'un parallélogramme (25) .

12. Instrument pour canal radiculaire (1) selon l'une quelconque des revendications 7 à 11, dans lequel la section transversale (18) quadrangulaire se présente sous la forme d'un rectangle (24) et les deux petits côtés (19, 20) présentent un revêtement (8) pourvu de particules abrasives (9) .

13. Instrument pour canal radiculaire (1) selon l'une quelconque des revendications 7 à 11, dans lequel la section transversale (18) quadrangulaire se présente sous la forme d'un parallélogramme (25) et deux faces (19, 20) opposées présentent un revêtement (8) pourvu de particules abrasives (9) .

14. Instrument pour canal radiculaire (1) selon l'une quelconque des revendications 7 à 11 présentant une section transversale (38) triangulaire, dans lequel une des faces présente un revêtement (8) pourvu de particules abrasives (9).
